(19) Europäisches Patentamt
European Patent Office
Office européen des brevets

(11) EP 4 427 926 A1

(12) **EUROPEAN PATENT APPLICATION**

(43) Date of publication:
**11.09.2024 Bulletin 2024/37**

(21) Application number: **23160378.8**

(22) Date of filing: **07.03.2023**

(51) International Patent Classification (IPC):
***B32B 7/12*** *(2006.01)* ***B32B 27/08*** *(2006.01)*
***B32B 27/30*** *(2006.01)* ***B32B 27/32*** *(2006.01)*
***C08J 5/18*** *(2006.01)* ***C08L 23/04*** *(2006.01)*
***B32B 7/023*** *(2019.01)* ***B32B 7/027*** *(2019.01)*

(52) Cooperative Patent Classification (CPC):
**C08L 23/04; B32B 7/023; B32B 7/027; B32B 7/12; B32B 27/08; B32B 27/30; B32B 27/327; C08J 5/18;** B32B 2250/03; B32B 2250/24; B32B 2250/246; B32B 2250/40; B32B 2270/00; B32B 2307/30; B32B 2307/31; (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
- **WANG, Jingbo**
  **4021 Linz (AT)**
- **FAWAZ, Joel**
  **4021 Linz (AT)**
- **GAHLEITNER, Markus**
  **4021 Linz (AT)**
- **BERNREITNER, Klaus**
  **4021 Linz (AT)**
- **NIEDERSUESS, Peter**
  **4021 Linz (AT)**
- **ORTNER, Stefan**
  **4021 Linz (AT)**

(74) Representative: **Maiwald GmbH**
**Elisenhof**
**Elisenstraße 3**
**80335 München (DE)**

# (54) BIAXIALLY ORIENTED POLYPROPYLENE-BASED MULTILAYER FILM

(57) Polypropylene-based multilayer film, which is biaxially oriented, a process for manufacturing the biaxially oriented multilayer film and its use in flexible packaging.

EP 4 427 926 A1

(52) Cooperative Patent Classification (CPC): (Cont.)
B32B 2307/40; B32B 2307/408; B32B 2307/518;
B32B 2307/54; B32B 2307/546; B32B 2307/558;
B32B 2307/7166; B32B 2307/72;
B32B 2307/7376; B32B 2439/70; B32B 2571/00

## Description

The present invention relates to a polypropylene-based multilayer film, which is biaxially oriented, a process for manufacturing the biaxially oriented multilayer film and to its use in flexible packaging.

Polypropylene-based resins have been widely used in the food packaging field because they have excellent tensile strength, rigidity, transparency and the like, and are additionally advantageous due to their non-toxicity and odorlessness. Generally, they are used in the form of cast films (CPP), biaxially oriented films (BOPP) or water-quenched tubular films (TQPP). Biaxially oriented polypropylene (BOPP) films are films stretched in both machine and transverse directions, producing molecular chain orientation in two directions.

Biaxially oriented polypropylene-based (BOPP) multilayer films are commonly used in packaging industry, including food packaging.

Typically, this application comprises a sealing layer, which provides the necessary sealing performance for hermetically closing a packaging system. However, such a sealing layer is directly in contact with the food packed, therefore the cleanness, e.g. the low content of extractables, is very important.

Films for food packaging are typically transparent, or, more general, shall furthermore have good optical properties, like low haze to provide an attractive appearance.

Polypropylenes according to state of art technology are based on the Ziegler-Natta type catalyst technology, i.e. titanium-centred heterogeneous catalysts with aluminium alkyl activation. Thus, the sealing layer is typically a Ziegler-Natta catalysed propylene - ethylene - butene terpolymer.

WO 2009/019169 A1, for example, describes a process for providing Ziegler-Natta derived PP terpolymers suitable for blown film comprising at least 8 wt.-% of total comonomer units with the comonomer units being derived from ethylene and C4 to C8 alpha olefins by way of using 1,3-diether internal donor catalyst. According to WO 2009/019169 A1, an optimal balance of properties shall be observed when an ethylene content of lower than 2.5 wt.-% is combined with a butene-1 content of higher than 10 wt.-%, whereby alternatively when ethylene content is higher than 2.5 wt.-%, butene content should be lower than 10 wt.-%. A composition having an ethylene content of 1.2 wt.-% and 11.3 wt.-% butene, i.e. a C4/C2 (wt/wt) ratio of 9.4 resulted in a SIT of 107.4°C and 0.2 % haze (1mm plaque).

In the last decades this solution served the needs sufficiently. Due to the change of market requirements, such terpolymers have however somehow reached their limit, e.g. the sealing initiation temperature is not low enough, optics are not as good as required, etc..

Metallocene catalyst derived PP terpolymers have also already been described for sealing applications.

For instance, EP 20193414 A discloses bimodal C2C3C4 terpolymers made by polymerization in a loop reactor, followed by a gas phase reactor in the presence of a metallocene catalyst, whereby a quite high amount of polymer was produced in the gas phase reactor, i.e. 46.0 to 57.0 wt.-%, related to the final polymer.

The terpolymers were used to make cast films after their $MFR_2$ (ISO1133, 2.16 kg, 230 °C) of 2.0 g/10 min reached after polymerization has been adjusted to a final $MFR_2$ (ISO1133, 2.16 kg, 230 °C) in the range of 11.0 to 14.0 g/10 min.

BOPP films are in principle mentioned, but not demonstrated.

WO 2022167368 A discloses films made from a blend of a C2C3C4 terpolymer and a C3C4 random copolymer upgrading resin.

The C2C3C4 terpolymers is made by polymerization in a loop reactor, followed by a gas phase reactor in the presence of a metallocene catalyst, whereby an even higher amount of polymer was produced in the gas phase reactor, i.e. 59.0 wt.-%, related to the final polymer.

According to claim 1 the terpolymer can have a xylene cold soluble (XCS) content in the range of 5.0 to 25.0 wt.-%, preferably 15.0 to 19.0 wt.-% determined at 25 °C according ISO 16152. The terpolymer used in the Examples has a quite high amount of xylene cold soluble (XCS) fraction of 17.1 wt.-%.

As mentioned above, BOPP multilayer films are widely used in packaging. The key requirements are sealing properties, optical properties, like haze, and low extractable content. Thus, there is still the need for BOPP multilayer films having a very good sealing behaviour, low haze and low extractable content.

Therefore, it was one objective of the present invention to provide a new type of BOPP multilayer films with improved sealing properties, like low sealing initiation temperature (SIT) and broad processing window, and good optics, like low haze.

Another problem is the recycling of BOPP multilayer films after their first use. It is much more challenging to recycle BOPP multilayer films made of different materials, e.g. different kinds of polymers, like e.g. polyamide or polyester and polypropylene, than to recycle mono-material solutions. On the other hand, the use of different materials often is necessary to obtain acceptable properties, like sealing properties and mechanical properties. Therefore, another objective of the present invention is the provision of a polypropylene based mono-material solution, which shows a good sealing behaviour.

The present invention is therefore related to a biaxially oriented polypropylene-based multilayer film comprising

at least a core layer (CL), a first outer layer (OL1) and a second outer layer (OL2), wherein,

the first and the second outer layers (OL1) and (OL2) comprise a blend of

i) 60.0 to 95.0 wt.-%, based on the total weight of the blend, of a metallocene catalysed ethylene-propylene-1-butene terpolymer base resin having

- an ethylene (C2) content measured by $^{13}$C-NMR analysis (as described in the experimental part) in the range of 0.8 to 2.5 wt.-% with respect to the weight of the total ethylene-propylene-1-butene terpolymer base resin;
- a 1-butene (C4) content measured by $^{13}$C-NMR analysis (as described in the experimental part) in the range of 3.0 to 10.0 wt.-% with respect to the weight of the total ethylene-propylene-1-butene terpolymer base resin;
- a propylene (C3) content measured by $^{13}$C-NMR analysis (as described in the experimental part) in the range of 89.2 to 93.0 wt.-% with respect to the weight of the total ethylene-propylene-1-butene terpolymer base resin;

whereby the units derived from ethylene, propylene and butene add up to 100 wt.-%, and

- a melt flow rate $MFR_2$ (230 °C / 2.16 kg) measured according to ISO 1133 in the range from 3.0 to 35.0 g/10 min;
- a xylene cold soluble (XCS) content in the range of 1.0 to 4.5 wt.-%, determined at 25°C according ISO 16152;
- a melting temperature $T_m$ as determined by DSC according to ISO 11357 in the range from 120 to 140 °C;
- a crystallization temperature $T_c$ as determined by DSC according to ISO 11357 in the range from 80 to 115 °C and
- a number of 2,1 regio-defects measured by $^{13}$C-NMR analysis (as described in the experimental part) in the range of 0.10 to 1.0 mol-% and

ii) 40.0 to 5.0 wt.-%, based on the total weight of the blend, of a propylene-1-butene random copolymer having

- a melting temperature Tm measured by differential scanning calorimetry (DSC) in the range from 70 to 90°C,
- a 1-butene content measured by $^{13}$C-NMR analysis (as described in the experimental part) in an amount of 20.0 to 35.0 wt.-% with respect the total propylene-1-butene random copolymer,
  whereby the units derived from propylene and 1-butene add up to 100 wt.-%,
- a melt flow rate MFR2 (230 °C / 2.16 kg) measured according to ISO 1133 in the range of 1.0 to 18.0 g/10 min; and
- optionally an elongation at break (ASTM D638) of 100 to 900 %,

whereby the core layer (CL) is a polypropylene-based layer and

whereby the biaxially oriented polypropylene-based multilayer film has

a sealing initiation temperature measured on a 25μm biaxially oriented test cast film as described in the experimental part in the range of 50 to 90 °C,

a haze measured on a biaxially oriented test cast film with a thickness of 25 μm according to ASTM D 1003-00 in the range of 0.5 to 1.5%.

Unexpectedly, the biaxially oriented polypropylene-based multilayer film of the invention provides improved sealing properties, such as especially low sealing initiation temperature (SIT) in combination with low haze.

*Definitions*

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene catalysed ethylene-propylene-1-butene terpolymer base resin is defined in this invention as ethylene-propylene-1-butene terpolymer base resin, which has been produced in the presence of a metallocene catalyst.

The "terpolymer" according to the present invention denotes a polymer made of the monomers ethylene, propylene and 1-butene, whereby these monomers can be found in the polymer chain. The weight-content of units originating from these monomers adds up to 100 wt.-%. Pseudo terpolymers being made from mixtures of two copolymers do not subsume under the term "terpolymer" according to the present invention. Pseudo terpolymers can be recognized by coupled TREF-IR, coupled TREF-NMR or similar methods. As a matter of definition, a terpolymer according to the present invention is not a mixture of two copolymers.

Polypropylene-based layer is defined in this invention as layer, which is made of polypropylene polymers only, i.e. polymers other than polypropylenes are substantially absent.

Regio-defects

The regio-defects of propylene polymers can be of three different types, namely 2,1-erythro (2,le), 2,1-threo (2,lt) and 3,1 defects. A detailed description of the structure and mechanism of formation of regio-defects in polypropylene can be found in Chemical Reviews 2000, 100(4), pages 1316 to 1327. These defects are measured using $^{13}C$ NMR as described in more detail below.

The term "2,1 regio-defects" as used in the present invention defines the sum of 2,1-erythro regio-defects and 2,1-threo regio-defects. Propylene random copolymers or polypropylene homopolymers having a number of regio-defects as required in the propylene composition of the invention are usually and preferably prepared in the presence of a single-site catalyst.

The catalyst influences in particular the microstructure of the polymer. Accordingly, polypropylenes prepared by using a metallocene catalyst provide a different microstructure compared to those prepared by using Ziegler- Natta (ZN) catalysts. The most significant difference is the presence of regio-defects in metallocene-made polypropylenes, which is not the case for polypropylenes made by Ziegler-Natta (ZN) catalysts.

It is also understood within the meaning of this disclosure that the below described embodiments may be combined.

**Detailed description**

*Outer layers (OL1, OL2)*

According to the present invention, the multilayer film comprises a first and a second outer layer (OL1) and (OL2), which comprise a metallocene catalysed ethylene-propylene-1-butene terpolymer base resin and a propylene-1-butene random copolymer.

*Metallocene catalysed ethylene-propylene-1-butene terpolymer base resin*

The metallocene catalysed ethylene-propylene-1-butene terpolymer base resin is characterized by the following properties:

- an ethylene (C2) content measured by $^{13}C$-NMR analysis (as described in the experimental part) in the range of 0.8 to 2.5 wt.-% with respect the total weight of the ethylene-propylene-1-butene terpolymer base resin;
- a 1-butene (C4) content measured by $^{13}C$-NMR analysis (as described in the experimental part) in the range of 3.0 to 10.0 wt.-% with respect the total weight of the ethylene-propylene-1-butene terpolymer base resin;
- a propylene (C3) content measured by $^{13}C$-NMR analysis (as described in the experimental part) in the range of 89.2 to 93.0 wt.-% with respect the total weight of the ethylene-propylene-1-butene terpolymer base resin;

whereby the units derived from ethylene, propylene and butene add up to 100 wt.-%, and

- a melt flow rate $MFR_2$ (230 °C / 2.16 kg) measured according to ISO 1133 in the range from 3.0 to 35.0 g/10min;
- a xylene cold soluble (XCS) content in the range of 1.0 to 4.5 wt.-%, determined at 25 °C according ISO 16152;
- a melting temperature $T_m$ as determined by DSC according to ISO 11357 in the range from 120 to 140 °C;
- a crystallization temperature $T_c$ as determined by DSC according to ISO 11357 in the range from 80 to 115 °C and

- a number of 2,1 regio-defects measured by $^{13}C$-NMR analysis (as described in the experimental part) in the range of 0.10 to 1.0 mol-%.

The ethylene (C2) content of the ethylene-propylene-1-butene terpolymer base resin is preferably in the range of 0.9 to 2.2 wt.-%, more preferably 1.0 to 2.0 wt.-% and even more preferably 1.0 to 1.8 wt.-%, with respect to the total weight of the ethylene-propylene-1-butene terpolymer base resin.

The 1-butene (C4) content of the ethylene-propylene-1-butene terpolymer base resin is preferably in the range of 5.0 to 9.5 wt.-%, more preferably 6.5 to 9.0 wt.-%, with respect to the total weight of the ethylene-propylene-1-butene terpolymer base resin.

In an embodiment of the present invention the ethylene-propylene-1-butene terpolymer base resin has a total content of comonomers, i.e. C2 and C4 content, in the range of 7.0 to 10.8 wt.-%, preferably 7.5 to 10.5 wt.-%, more preferably 8.0 to 10.0 wt.-%, with respect to the total weight of the ethylene-propylene-1-butene terpolymer base resin.

The melt flow rate $MFR_2$ (230 °C / 2.16 kg) measured according to ISO 1133 is preferably in the range of 3.5 to 20.0 g/10min, more preferably 3.8 to 15.0 g/19 min and even more preferably 4.0 to 10.0 g/ 10 min.

The xylene cold soluble (XCS) content as determined according to ISO 16152 is preferably in the range of 1.0 to 4.0 wt.-%, more preferably from 1.3 to 3.5 wt.-%, and even more preferably from 1.5 to 3.0 wt.-%, based on the weight of the ethylene-propylene-1-butene terpolymer base resin.

The melting temperature $T_m$ as determined by DSC according to ISO 11357 in preferably in the range of 122 to 135 °C and more preferably in the range of 125 to 130 °C.

The crystallization temperature $T_c$ as determined by DSC according to ISO 11357 is preferably in the range of 82 to 110 °C, more preferably 85 to 100 °C and even more preferably 86 to 90°C.

The number of 2,1 regio-defects measured by $^{13}C$-NMR analysis (as described in the experimental part) is preferably in the range of 0.15 to 0.90 mol-%, more preferably of 0.20 to 0.60 mol-%.

According to a further preferred embodiment of the present invention the ethylene-propylene-1-butene terpolymer base resin comprises, more preferably consists of, two polymer fractions (TERPO-1) and (TERPO-2) whereby the fraction (TERPO-1) is present in an amount of from 50.0 to 80.0 wt.-%, preferably from 60.0 to 78.0 wt.-% and more preferably from 67.0 to 75.0 wt.-%, based on the total weight ethylene-propylene-1-butene terpolymer base resin, and the fraction (TERPO-2) is thus present in an amount of from 20.0 to 50.0 wt.-%, and preferably from 22.0 to 40.0 wt.-% and more preferably from 25.0 to 33.0 wt.-%, based on the total weight of the ethylene-propylene-1-butene terpolymer base resin.

Optionally, a small fraction of prepolymer, usually below 5.0 wt.-%, based on the total weight of the ethylene-propylene-1-butene terpolymer base resin, may also be present in the ethylene-propylene-1-butene terpolymer base resin. Such prepolymer fraction, if present usually counts to the amount of fraction (TERPO-1).

Still another embodiment in accordance with the present invention stipulates that the fraction (TERPO-1) of the ethylene-propylene-1-butene terpolymer base resin has an ethylene content in the range of 0.2 to 2.0 wt.-%, preferably of 0.4 to 1.8 wt.-% and more preferably of 0.5 to 1.5 wt.-%, and/or the fraction (TERPO-2) has an ethylene content in the range of 1.0 to 4.0 wt.-%, preferably of 1.2 to 3.5 wt.-% and more preferably of 1.3 to 3.0 wt.-%.

The ethylene content of fraction (TERPO-1) is preferably lower than the ethylene content of fraction (TERPO-2).

The 1-butene content of fraction (TERPO-1) of the ethylene-propylene-1-butene terpolymer base resin is in the range of 2.5 to 10.0 wt.-%, preferably 3.5 to 9.0 wt.-% and more preferably 4.5 to 8.0 wt.-% and/or the fraction (TERPO-2) has an 1-butene content in the range of 5.0 to 15.0 wt.-%, preferably of 5.5 to 14.0 wt.-% and more preferably of 6.0 to 13.0 wt.-%.

Another preferred embodiment of the present invention stipules that the ethylene-propylene-1-butene terpolymer base resin is produced in the presence of a metallocene catalyst, which is preferably a metallocene catalyst comprising a complex in any one of the embodiments as described in WO 2013/007650 A1, WO 2015/158790 A2, WO 2018/122134 A1 or WO2019/179959.

Preferred complexes for the preparation of the ethylene-propylene-1-butene terpolymer base resin are for example described in WO 2019179959.

More preferred complexes are of formula (I)

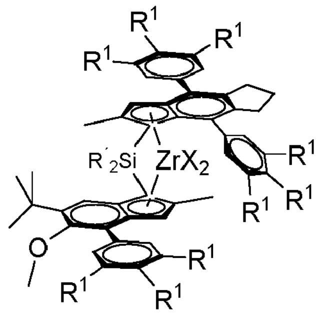

wherein each R' are independently the same or can be different and are hydrogen or a linear or branched $C_1$-$C_6$-alkyl group, whereby at least on R' per phenyl group is not hydrogen,
R' is a $C_{1-10}$ hydrocarbyl group, preferably a $C_{1-4}$ hydrocarbyl group and more preferably a methyl group and
X independently is a hydrogen atom, a halogen atom, $C_{1-6}$ alkoxy group, $C_{1-6}$ alkyl group, phenyl or benzyl group.

Most preferably, X is chlorine, benzyl or a methyl group. Preferably, both X groups are the same. The most preferred options are two chlorides, two methyl or two benzyl groups, especially two chlorides.

Specific preferred metallocene catalyst complexes of the invention include:

rac-anti-di methylsi lanediyl [2-methyl-4,8-bis-(4'-tert-butyl phenyl)- 1, 5,6,7-tetrahyd ro-s-indacen-1-yl][2-methyl-4-(3',5'-dimethyl-phenyl)-5-methoxy-6-tert-butylinden-1-yl] zirconium dichloride
rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride
rac-anti-dimethylsilanediyl[2-methyl-4,8-bis-(3',5'-dimethylphenyl)-1,5,6,7-tetrahydro-s-indacen-1-yl][2-methyl-4-(3',5'-ditert-butyl-phenyl)-5-methoxy-6-tert-butylinden-1-yl] zirconium dichloride
or their corresponding zirconium dimethyl analogues.

In another preferred embodiment of the present invention a cocatalyst system comprising a boron containing cocatalyst, e.g. a borate cocatalyst and an aluminoxane cocatalyst is used.

The catalyst can be used in supported or unsupported form, preferably in supported form. The particulate support material used is preferably an organic or inorganic material, such as silica, alumina or zirconia or a mixed oxide such as silica-alumina, in particular silica, alumina or silica-alumina. The use of a silica support is preferred. The skilled person is aware of the procedures required to support a metallocene catalyst.

Especially preferably, the support is a porous material so that the complex may be loaded into the pores of the support, e.g. using a process analogous to those described in WO94/14856 (Mobil), WO95/12622 (Borealis) and WO2006/097497.

The average particle size of the silica support can be typically from 10 to 100 μm. However, it has turned out that special advantages can be obtained if the support has an average particle size from 15 to 80 μm, preferably from 18 to 50 μm.

The average pore size of the silica support can be in the range 10 to 100 nm and the pore volume from 1 to 3 mL/g.

Examples of suitable support materials are, for instance, ES757 produced and marketed by PQ Corporation, Sylopol 948 produced and marketed by Grace or SUNSPERA DM-L-303 silica produced by AGC Si-Tech Co. Supports can be optionally calcined prior to the use in catalyst preparation in order to reach optimal silanol group content.

The use of these supports is routine in the art.

The ethylene-propylene-1-butene terpolymer base resin can be produced in a single polymerization step comprising a single polymerization reactor (R1) or in a sequential polymerization process comprising at least two polymerization reactors (R1) and (R2), whereby in the first polymerization reactor (R1) a first fraction (TERPO-1) is produced, which is subsequently transferred into the second polymerization reactor (R2). In the second polymerization reactor (R2) a second fraction (TERPO-2) is produced in the presence of the first fraction (TERPO-1).

Polymerization processes which are suitable for producing the ethylene-propylene-1-butene terpolymer base resin generally comprises one or two polymerization stages and each stage can be carried out in solution, slurry, fluidized bed, bulk or gas phase.

The term "polymerization reactor" shall indicate that the main polymerization takes place. Thus in case the process consists of one or two polymerization reactors, this definition does not exclude the option that the overall system comprises for instance a pre-polymerization step in a pre-polymerization reactor. The term "consist of" is only a closing formulation in view of the main polymerization reactors.

The term "sequential polymerization process" indicates that the ethylene-propylene-1-butene terpolymer base resin is produced in at least two reactors connected in series. Accordingly, such a polymerization system comprises at least a first polymerization reactor (R1) and a second polymerization reactor (R2), and optionally a third polymerization reactor (R3).

A preferred multistage process is a "loop-gas phase"-process, such as developed by Borealis (known as BORSTAR® technology) described e.g. in patent literature, such as in EP 0 887 379, WO 92/12182, WO 2004/000899, WO 2004/111095, WO 99/24478, WO 99/24479 or in WO 00/68315.

A further suitable slurry-gas phase process is the Spheripol® process of Basell.

The ethylene-propylene-1-butene terpolymer base resin in any of its embodiments comprising two fractions (TERPO-1) and (TERPO-2) is preferably produced in a process comprising the following steps:

a) polymerizing in a first reactor (R1) propylene, ethylene and 1-butene, obtaining polymer fraction (TERPO-1),
b) transferring said polymer fraction (TERPO-1) and unreacted comonomers of the first reactor in a second reactor (R2),
c) feeding to said second reactor (R2) propylene, ethylene and 1-butene,
d) polymerizing in said second reactor (R2) and in the presence of said polymer fraction (TERPO-1) propylene, ethylene and 1-butene to obtain polymer fraction (TERPO-2) in an intimate mixture with (TERPO-1) and hence the final ethylene-propylene-1-butene terpolymer base resin, whereby preferably the polymerization takes place in the presence of a metallocene catalyst system in any one of the embodiments as described herein.

The ethylene-propylene-1-butene terpolymer base resin may comprise one or more usual additives, preferably in a total amount of from 0.01 up to 5.0 wt.-%, more preferably from 0.05 to 3.0 wt.-% based on the total weight of the propylene-ethylene random copolymer, selected from the group consisting of slip agents, anti-block agents, UV stabilizers, antistatic agents, alpha-nucleating agents, antioxidants and mixtures thereof. Preferably, at least an antioxidant is added to the propylene-ethylene random copolymer of the invention.

*Propylene-1-butene random copolymer*

The propylene-1-butene random copolymer is characterized by having at least:

- a melting temperature Tm measured by differential scanning calorimetry (DSC) according to ISO11357 in the range from 70 to 90°C,
- a 1-butene content measured by $^{13}$C-NMR analysis (as described in the experimental part) in an amount of 20.0 to 35.0 wt.-% with respect the total propylene-1-butene random copolymer,
  whereby the units derived from propylene and butene add up to 100 wt.-%,
- a melt flow rate $MFR_2$ (230 °C / 2.16 kg) measured according to ISO 1133 in the range of 1.0 to 18.0 g/10min; and
- optionally an elongation at break (ASTM D638) of 100 to 900 %,

Preferably the melting temperature is in the range of 72 to 85 °C, more preferably 73 to 80 °C.

The 1-butene content is preferably in the range of 22.0 to 34.5 wt.-%, more preferably in the range of 24.0 to 34.0 wt.-%.

The melt flow rate $MFR_2$ (230 °C / 2.16 kg) measured according to ISO 1133 is preferably in the range of 3.0 to 15.0 g/10min, more preferably 5.0 to 12.0 g/10 min.

In a preferred embodiment the propylene-1-butene random copolymer has an elongation at break (ASTM D638) of 100 to 900 %, preferably of 300 to 850 % and more preferably of 500 to 800 %.

In another embodiment the propylene-1-butene random copolymer has in addition one or more, preferably all of the following:

a) a tensile strength at break (ASTM D638) of at least 15 MPa, preferably in the range of 16 to 50 MPa, more preferably 20 to 45 MPa and even more preferably 25 to 40 MPa;
b) a tensile (Young's) modulus (according to ASTM D638) of least 200 MPa, preferably in the range of 210 to 450 MPa, more preferably 250 to 400 MPa;
c) a shore D hardness (ASTM D2240) of at least 45, preferably in the range of 48 to 65, more preferably 50 to 60.

Propylene-1-butene random copolymers having these features are commercially available inter alia from Mitsui Chemicals e.g. under the tradename Tafmer XM series.

Each of the outer layers (OL-1) and (OL-2) according to present invention are preferably made by blending the ethylene-propylene-1-butene terpolymer base resin in an amount of 70 to 95 wt.-%, with respect to the total blend, with

5 to 30 wt.-%, with respect to the total blend, of the propylene-1-butene random copolymer. The ethylene-propylene-1-butene terpolymer base resin and the propylene-1-butene random copolymer preferably add up to at least 98 wt.-%, preferably up to 100 wt.-% of each of the outer layers, i.e. the resulting outer layer material is essentially free, more preferably entirely free of other polymer components.

More preferably, the ethylene-propylene-1-butene terpolymer base resin is present in an amount of 75 to 90 wt.-%, with respect to the total blend, and the propylene-1-butene random copolymer is present in an amount of 10 to 25 wt.-%, based on the total blend.

*Core layer*

According to the present invention, the multilayer film comprises furthermore a core layer (CL), which is a polypropylene-based layer.

Suitable polypropylene polymers are propylene homopolymers or propylene random copolymers.

Preferably, propylene homopolymers are used.

*The propylene homopolymer (H-PP)*

In an embodiment of the present invention, the core layer (CL) comprises a propylene homopolymer (H-PP). More preferably, the core layer (CL) consists of a propylene homopolymer (H-PP).

The expression "propylene homopolymer" used in the instant invention relates to a polypropylene that consists substantially, i.e. of more than 98.0 wt.-% of, preferably of more than 99.0 wt.-%, even more preferably of more than 99.5 wt.-%, still more preferably of at least 99.8 wt.-%, of propylene units. In a preferred embodiment, only propylene units in the propylene homopolymer (HPP) are detectable.

Accordingly, it is preferred that the propylene homopolymer (H-PP) has a xylene soluble content (XCS) as determined according to ISO 16152 of below 5.0 wt.-%, more preferably below 4.0 wt.-%, still more preferably below 3.5 wt.-%.

It is preferred that the propylene homopolymer (H-PP) is featured by a high isotacticity. Accordingly, it is preferred that the propylene homopolymer (H-PP) has a mmmm pentad concentration of ≥ 85.0 %, preferably in the range of from 85.0 to 98.0 % determined by NMR-spectroscopy, and/or 2,1 erythro regio-defects of below 1.0 %, preferably below 0.5 %, more preferably below 0.3 % determined by $^{13}C$-NMR spectroscopy.

A suitable lower limit is 0.0 % for Ziegler-Natta catalysed propylene homopolymers and 0.05 % for metallocene catalysed propylene homopolymers.

It is especially preferred that the propylene homopolymer (H-PP) has a weight average molecular weight Mw in the range of 260 to 1000 kg/mol, preferably in the range of 300 to 700 kg/mol, still more preferably in the range of 380 to 650 kg/mol.

Further, it is preferred that the propylene homopolymer (H-PP) has a rather broad molecular weight distribution (Mw/Mn). Accordingly, it is preferred that the molecular weight distribution (Mw/Mn) of the propylene homopolymer (H-PP) is in the range of 3.5 to 10.0, more preferably in the range of 4.0 to 8.5, like in the range of 4.5 to 7.5.

Additionally, it is preferred that the propylene homopolymer (H-PP) has a very low melt flow rate. Accordingly, the melt flow rate (2.16 kg, 230 °C) measured according to ISO 1133 of the propylene homopolymer (H-PP) is preferably in the range of 0.1 to 15.0 g/10 min, more preferably in the range of 1.5 to 10.0 g/10 min, still more preferably in the range of 2.5 to 4.0 g/10 min.

In a preferred embodiment, the propylene homopolymer (H-PP) is thermomechanically stable. Accordingly, it is preferred that the propylene homopolymer (H-PP) has a melting temperature Tm of at least 145 °C, more preferably at least 150 °C, still more preferably at least 160 °C. A reasonable upper limit for Tm is 170 °C.

Preferably, the propylene homopolymer (H-PP) according to the present invention is a propylene homopolymer known in the art.

In particular, it is preferred that the propylene homopolymer (H-PP) is the commercial propylene homopolymer HC101BF of Borealis AG.

*Film structure*

According to the present invention, the multilayer film comprises at least a first and the second outer layers (OL1) and (OL2) and a core layer (CL).

The outer layers (OL1) and (OL2) of the multilayer film according to the present invention acts as sealing layers.

The term "sealing layer" is understood herein as used in the technical field of packaging, i.e. the term "sealing layer" indicates that said layer can be used for sealing purposes, i.e. on the surface of this layer or part of this layer the sealing can take place.

In one preferred embodiment the multilayer biaxially oriented film comprises at least three layers, namely at least one core layer (CL), and two sealing, respectively outer layers (OL1 and OL2), namely a first sealing, respectively outer layer (OL1) and a second sealing, respectively outer layer (OL2), wherein the multilayer biaxially oriented polymer film has the stacking order first sealing, respectively outer layer (OL1) - core layer (CL) - second sealing, respectively outer layer (OL2).

The first sealing, respectively outer layer (OL1) and second sealing, respectively outer layer (OL2) can be chemically different, i.e. a different ethylene-propylene-1-butene terpolymer base resin and/or propylene-1-butene random copolymer as described above, or identical, i.e. the same blends of ethylene-propylene-1-butene terpolymer base resin and propylene-1-butene random copolymer, the latter being preferred.

The films according to the present invention may further comprise one or two tie layers (TL1) and (TL2). The optional tie layers are located between the core layer (CL) and one or both of the outer layers (OL1) and/or (OL2).

A possible film structure therefore is OL1/TL1/CL/TL2/OL2.

In an embodiment the tie layers (TL1) and (TL2) are made of a polypropylene based polymer, preferably of the same propylene based polymer.

Suitable polypropylene based polymers are as defined above for the core layer (CL).

In a preferred embodiment, the tie layers (TL1) and (TL2) are made of the same polypropylene polymer as the core layer (CL), more preferably the same propylene homopolymer (H-PP).

Preferably, the multilayer biaxially oriented polymer film is obtained by coextrusion. The coextrusion can be accomplished on a blown film line or on a cast film line, the latter being preferred. After coextrusion the multilayer oriented polymer film is biaxially stretched.

Conventional film production techniques may be used for the production of the multilayer film according to the present invention. Typically, the film layers are coextruded in manner as known in the art and then oriented to yield the biaxially oriented (BOPP) multilayer film. Thus, after coextrusion of the layers, the so obtained multilayered films are oriented in machine direction (MDO) as well as in transverse direction (TDO).

In case the multilayer biaxially oriented polymer film is produced by cast film technology the molten polymers are extruded through flat extrusion die onto a chill roll to cool the polymer to a solid film of at least three layers.

For the production of the multilayer biaxially oriented polymer film the process is carried out by coextruding the melts of the polymer for the core layer (CL), of the propylene-ethylene random copolymer for the outer layers (OL1 and OL2) and optionally of the polymer for the tie layers (TL1 and/or TL2), corresponding to the individual layers of the multilayer biaxially oriented polymer film through flat-film multilayer die, taking off the resultant polymer film over one or more rolls for solidification. As it is conventional in the coextrusion process, the polymer of each respective individual layer is firstly compressed and liquefied in an extruder, it being possible for any additives to be already added to the polymer or introduced at this stage via a masterbatch. The melts are then forced simultaneously through a flat-film die (slot die), and the extruded multilayer polymer film is taken off on one or more take-off rolls, during which it cools and solidifies.

It has proven particularly favorable to keep the take-off roll or rolls, by means of which the extruded film is cooled and solidified. Orientation may be accomplished by stretching or pulling the film first in the machine direction (MD) followed by transverse direction (TD) orientation, like in the tenter-frame orientation process. Orientation may be sequential or simultaneous, depending upon the desired film features. Preferred orientation ratios are commonly from between three to six in the machine direction and between four to ten in the transverse direction.

Thus, in the BOPP film the layers may have the following thicknesses:
Each outer layer: 0.3 μm to 3.0 μm, preferably 0.5 μm to 2.0 μm, more preferably 0.8 μm to 1.5 μm.

Preferably, both outer layers have the same thickness.

Core layer: 5 μm to 40 μm, preferably 10 μm to 35 μm, more preferably 15 μm to 25 μm. Each tie layers, if present: 1.0 μm to 5 μm, preferably 1.5 μm to 4.5 μm, more preferably 2.0 μm to 4.50 μm.

Preferably, both tie layers have the same thickness.

The total thickness of the BOPP film is 8 μm to 80 μm, preferably 10 μm to 60 μm, more preferably 15 μm to 40 μm.

The thickness of a film layer can be determined, as known in the art, by microscopic techniques, such as optical microscopy or electronic microscopy. As an example, a thin slice of the film is cut perpendicularly to the plane of the film using a microtome blade as follows. The film is cooled in liquid nitrogen in a microtome holder. Then a microtome blade cuts several slices from about 10 to 15 microns in thickness. These slices are then observed with an optical microscope, and an image is projected therefrom. A software program, as known in the art, can be used to measure the thickness of each layer as shown on the projected image. Measurements can be made at different points on the image, and then an average can be determined. The film layers are clearly distinguishable by their different contrasts.

Optionally one or both, surface (s) of the multi-layer biaxially oriented polymer film can be corona-or flame-treated by one of the known methods. For the corona treatment, the film is passed between two conductor elements serving as electrodes, with such a high voltage, usually an alternating voltage (about 10000 V and 10000 5 Hz), being

applied between the electrodes that spray or corona discharges can occur. Due to the spray or corona discharge, the air above the film surface is ionized and reacts with the molecules of the film surface, causing formation of polar inclusions in the essentially non-polar polymer matrix. The treatment intensities are in the usual range, preferably from 38 to 45 dynes/cm after production.

The biaxially oriented polypropylene-based multilayer film according to the present invention is characterized by a sealing initiation temperature determined as described in the experimental part on a BOPP film with a thickness of 25 μm of in the range of 50 to 90 °C, preferably in the range of 65 to 88 °C, and more preferably in the range of 70°C to 85 °C.

Furthermore, the biaxially oriented polypropylene-based multilayer film has a haze (measured on a BOPP film with a thickness of 25 μm according to ASTM D 1003-00) in the range 0.5 to 1.5%, preferably between 0.55 % and 1.0 %.

Additionally, the biaxially oriented polypropylene-based multilayer film may have a tensile modulus in machine and transverse direction (measured on a BOPP film with a thickness of 25 μm according to ISO 527-3 at 23 °C) in the range of 1000 to 3000 MPa, preferably in the range of 1200 to 2800 MPa.

In an embodiment the biaxially oriented polypropylene-based multilayer film according to the present invention has a broadened processing window, which is defined by the difference between the melting temperature Tm of the ethylene-propylene-1-butene terpolymer base resin, determined according to DSC analysis, and the sealing initiation temperature (SIT) of the film.

Preferably, this difference is in the range of 30 to 70 °C, more preferably in the range of 35 to 65 °C, and even more preferably in the range from 40 to 60 °C.

The inventive multilayer biaxially oriented polymer film is fully recyclable and thus improves sustainability, as it is a "100 % PP" solution with no other polymer than propylene-based polymers being present.

Furthermore, the present invention is also directed to the use of the inventive multilayer biaxially oriented polymer film as packing material, in particular as a packing material for food and/or non-food products like textiles, flowers, pet food, detergents and protective films for cardboard boxes containing tobacco product or perfumes.

The invention will be further described with reference to the following non-limiting examples.

**Experimental Part**

**Measuring methods**

The following definitions of terms and determination methods apply for the above general description of the invention as well as to the below examples unless otherwise defined.

**Melt Flow Rate of the ethylene-propylene-1-butene terpolymer base resin**

The melt flow rate (MFR) was determined according to ISO 1133 - Determination of the melt mass-flow rate (MFR) and melt volume-flow rate (MVR) of thermoplastics Part 1: Standard method and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

**Comonomer content of the second polymer fraction (TERPO-2)**

The comonomer content of the second polymer faction (TERPO-2) is calculated according to formula (I).

$$\frac{C(A) - w(A1) x\, C(A1)}{w(A2)} = C(A2) \quad (I)$$

wherein

w(A-1) is the weight fraction [in wt.-%] of the first polymer fraction (TERPO-1),
w(A-2) is the weight fraction [in wt.-%] of second polymer fraction (TERPO-2),
C(A-1) is the comonomer content [in wt.-%] of the first polymer fraction (TERPO-1),
C(A) is the comonomer content [in wt.-%] of the ethylene-propylene-1-butene terpolymer (TERPO),
C(A-2) is the calculated comonomer content [wt.-%] of the second polymer fraction (TERPO-2).

**Calculation of melt flow rate $MFR_2$ of the polymer fraction (TERPO-2)**

The MFR of the second polymer faction (RACO-2) is calculated according to formula (II).

$$MFR(A2) = 10^{\left[\frac{\log(MFR(A)) - w(A1)\ x \log(MFR(A1))}{w(A2)}\right]} \quad (II)$$

wherein

w(A1) is the weight fraction [in wt.-%] of the polymer fraction TERPO-1,
w(A2) is the weight fraction [in wt.-%] of the polymer fraction TERPO-2,
MFR(A1) is the melt flow rate $MFR_2$ (230 °C) [g/10min] of the polymer fraction TERPO-1,
MFR(A) is the melt flow rate $MFR_2$ (230 °C) [g/10min] of the entire ethylene-propylene-1-butene terpolymer (TERPO),
MFR(A2) is the calculated melt flow rate $MFR_2$ (230 °C) [g/10min] of the polymer fraction TERPO-2.

**Quantification of microstructure by NMR spectroscopy (comonomer content & regio-defects) of the ethylene-propylene-1-butene terpolymer base resin**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05,griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm.

Characteristic signals corresponding to the incorporation of 1-butene were observed {brandolini01} and the comonomer content quantified.

The amount of isolated 1-butene incorporated in PBP sequences was quantified using the integral of the αB2 sites at 43.6 ppm accounting for the number of reporting sites per comonomer:

$$B = I_{\alpha B2} / 2$$

The amount of consecutively incorporated 1-butene in PBBP sequences was quantified using the integral of the ααB2B2 site at 40.5 ppm accounting for the number of reporting sites per comonomer:

$$BB = 2 * I_{\alpha\alpha B2B2}$$

In presence of BB the value of B must be corrected for the influence of the αB2 sites resulting from BB:

$$B = (I_{\alpha B2} / 2) - BB/2$$

The total 1-butene content was calculated based on the sum of isolated and consecutively incorporated 1-butene:

$$B_{total} = B + BB$$

Characteristic signals corresponding to the incorporation of ethylene were observed {brandolini01} and the comonomer content quantified.

The amount of isolated ethylene incorporated in PEP sequences was quantified using the integral of the Sββ

sites at 24.3 ppm accounting for the number of reporting sites per comonomer:

$$E = I_{S\beta\beta}$$

If characteristic signals corresponding to consecutive incorporation of ethylene in PEE sequence was observed the Sβδ site at 27.0 ppm was used for quantification:

$$EE = I_{S\beta\delta}$$

Characteristic signals corresponding to regio defects were observed {resconi00}. The presence of isolated 2,1-erythro regio defects was indicated by the presence of the two methyl sites at 17.7 and 17.2 ppm, by the methylene site at 42.4 ppm and confirmed by other characteristic sites. The presence of 2,1 regio defect adjacent an ethylene unit was indicated by the two inequivalent Sαβ signals at 34.8 ppm and 34.4 ppm respectively and the Tγγ at 33.7 ppm.

The amount of isolated 2,1-erythro regio defects ($P_{21e\ isolated}$) was quantified using the integral of the methylene site at 42.4 ppm ($I_{e9}$):

$$P_{21e\ isolated} = I_{e9}$$

If present the amount of 2,1 regio defect adjacent to ethylene ($P_{E21}$) was quantified using the methine site at 33.7 ppm ($I_{T\gamma\gamma}$):

$$P_{E21} = I_{T\gamma\gamma}$$

The total ethylene content was then calculated based on the sum of ethylene from isolated, consecutively incorporated and adjacent to 2,1 regio-defects:

$$E_{total} = E + EE + P_{E21}$$

The amount of propene was quantified based on the Sαα methylene sites at 46.7 ppm including all additional propene units not covered by Sαα e.g. the factor $3*P_{21e\ isolated}$ accounts for the three missing propene units from isolated 2,1-erythro regio-defects:

$$P_{total} = I_{S\alpha\alpha} + 3*P_{21e\ isolated} + B + 0.5*BB + E + 0.5*EE + 2*P_{E21}$$

The total mole fraction of 1-butene and ethylene in the polymer was then calculated as:

$$fB = B_{total} / ( E_{total} + P_{total} + B_{total} )$$

$$fE = E_{total} / ( E_{total} + P_{total} + B_{total} )$$

The mole percent comonomer incorporation was calculated from the mole fractions:

$$B\ [mol\%] = 100 * fB$$

$$E\ [mol\%] = 100 * fE$$

The weight percent comonomer incorporation was calculated from the mole fractions:

$$B\ [wt.-\%] = 100 * ( fB * 56.11 ) / ( (fE * 28.05) + (fB * 56.11) + ((1-(fE+fB)) * 42.08) )$$

$$E\ [wt.-\%] = 100 * ( fE * 28.05 ) / ( (fE * 28.05) + (fB * 56.11) + ((1-(fE+fB)) * 42.08) )$$

The mole percent of isolated 2,1-erythro regio-defects was quantified with respect to all propene:

$$[21e]\ mol\% = 100 * P_{21e\ isolated} / P_{total}$$

The mole percent of 2,1 regio-defects adjacent to ethylene was quantified with respect to all propene:

$$[E21]\ mol\% = 100 * P_{E21} / P_{total}$$

The total amount of 2,1 defects was quantified as following:

$$[21]\ mol\% = [21e] + [E21]$$

Characteristic signals corresponding to other types of regio-defects (2,1-threo, 3,1 insertion) were not observed {resconi00}.

Literature (as referred to above):

klimke06 Klimke, K., Parkinson, M., Piel, C., Kaminsky, W., Spiess, H.W., Wilhelm, M., Macromol. Chem. Phys. 2006;207:382.
parkinson07 Parkinson, M., Klimke, K., Spiess, H.W., Wilhelm, M., Macromol. Chem. Phys. 2007;208:2128.
pollard04 Pollard, M., Klimke, K., Graf, R., Spiess, H.W., Wilhelm, M., Sperber, O., Piel, C., Kaminsky, W., Macromolecules 2004;37:813.
filip05 Filip, X., Tripon, C., Filip, C., J. Mag. Resn. 2005, 176, 239
griffin07 Griffin, J.M., Tripon, C., Samoson, A., Filip, C., and Brown, S.P., Mag. Res. in Chem. 200745, S1, S198.
castignolles09 Castignolles, P., Graf, R., Parkinson, M., Wilhelm, M., Gaborieau, M., Polymer 50 (2009) 2373.
resconi00 Resconi, L., Cavallo, L., Fait, A., Piemontesi, F., Chem. Rev. 2000, 100, 1253.
brandolini01 A.J. Brandolini, D.D. Hills, "NMR spectra of polymers and polymer additives", Marcel Deker Inc., 2000

**Xylene solubles (XCS, wt.-%)**

The xylene soluble (XCS) fraction as defined and described in the present invention was determined in line with ISO 16152 as follows: 2.0 g of the polymer were dissolved in 250 ml p-xylene at 135 °C under agitation. After 30 minutes, the solution was allowed to cool for 15 minutes at ambient temperature and then allowed to settle for 30 minutes at 25 +/- 0.5 °C. The solution was filtered with filter paper into two 100 ml flasks. The solution from the first 100 ml vessel was evaporated in nitrogen flow and the residue dried under vacuum at 90°C until constant weight is reached. The xylene soluble fraction (percent) can then be determined as follows:

$$XCS\% = (100*m*V0)/(m0*v)$$

m0 = initial polymer amount (g);
m = weight of residue (g);
V0 = initial volume (ml);
v = volume of analysed sample (ml).

**DSC analysis, melting (Tm) and crystallization temperature (Tc)**

Data were measured with a TA Instrument Q2000 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225 °C. Crystallization temperature ($T_c$) and crystallization enthalpy ($H_c$) were determined from the cooling step, while melting temperature ($T_m$) and melting enthalpy ($H_m$) are determined from the second heating step.

**Sealing behavior**

**Sealing initiation temperature (SIT) at different seal strengths:**

The measurement was done according to the slightly modified ASTM F1921 - 12, where the test parameters sealing pressure, cooling time and test speed have been modified. The determination of the force/temperature curve was continued until thermal failure (burn through) of the film. The sealing range was determined on a J&B Universal Sealing Machine Type 4000 with a 3 layer biaxially oriented test cast film of 25 μm thickness cut into 25 mm wide strips with the following further parameters:

Conditioning time: > 96 h
Specimen width: 25 mm
Sealing pressure: 25 N/$cm^2$
Sealing time: 0.5 sec
Delay time: 30 sec
Sealing jaws dimension: 50x5 mm
Sealing jaws shape: flat
Sealing jaws coating: Niptef
Sealing temperature: ambient - 240°C
Sealing temperature interval: 5°C
Start temperature: 50°C
Grip separation rate: 42 mm/sec

Seal strength was determined as integral part of the test by tensile loading of the sealed strips at a test speed of 200 mm/min, recording the temperatures at which strengths of 100, 200 and 300 g per 25 mm width were reached. The most relevant value corresponds to 300 g/25 mm.

**Haze**

Haze was determined on the biaxially oriented multilayered films prepared as described below according to ASTM D1003-00.

**2. Examples**

**Propylene-ethylene random copolymer preparation**

**Catalyst: Synthesis of metallocene**

The metallocene complex (Metallocene MC-2) has been produced as described in WO2019/179959 for MC-2.

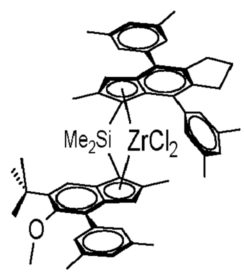

*Preparation of MAO-silica support*

A steel reactor equipped with a mechanical stirrer and a filter net was flushed with nitrogen and the reactor temperature was set to 20°C. Next silica grade DM-L-303 from AGC Si-Tech Co, pre-calcined at 600°C (5.0 kg) was added from a feeding drum followed by careful pressuring and depressurising with nitrogen using manual valves. Then toluene (22 kg) was added. The mixture was stirred for 15 min. Next 30 wt.-% solution of MAO in toluene (9.0 kg) from Lanxess was added via feed line on the top of the reactor within 70 min. The reaction mixture was then heated up to 90°C and stirred at 90°C for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated $SiO_2$ was dried at 60° under nitrogen flow for 2 hours and then for 5 hours under vacuum (-0.5 barg) with stirring. MAO treated support was collected as a free-flowing white powder found to contain 12.2% Al by weight.

*Inventive Catalyst System 1(ICS1) Catalyst preparation*

30 wt% MAO in toluene (0.7 kg) was added into a steel nitrogen blanked reactor via a burette at 20°C. Toluene (5.4 kg) was then added under stirring. Metallocene MC-2 (93 g) was added from a metal cylinder followed by flushing with 1 kg toluene. The mixture was stirred for 60 minutes at 20°C. Trityl tetrakis(pentafluorophenyl) borate (91 g) was then added from a metal cylinder followed by a flush with 1 kg of toluene. The mixture was stirred for 1 h at room temperature. The resulting silution was added to a a stirred cake of MAO-silica support prepared as described above over 1 hour. The cake was allowed to stay for 12 hours, folled by drying under $N_2$ flow at 60°C for 2h and additionaly for 5 h under vacuum (-0.5 barg) under stirring stirring.

Dried catalyst was sampled in the form of pink free flowing powder containing 13.9% Al and 0.11% Zr.

The polymerization for preparing the ethylene-propylene-1-butene terpolymer base resin was performed in a Borstar pilot plant with a 2-reactor set-up (loop - gas phase reactor (GPR)) and a pre-polymerizer, using the catalyst system as described above.

In Table 1, the polymerization conditions for inventive and the comparative ethylenepropylene-1-butene terpolymer base resin and the final properties of the resins are given.

**Table 1:** Polymerization conditions and final properties of inventive ethylene-propylene-1-butene terpolymer base resin (IE1) and comparative ethylene-propylene-1-butene terpolymer base resin:

| | | C2C3C4 terpo (Inventive) | C2C3C4 terpo (comparative) |
|---|---|---|---|
| **Prepolymerizer** | | | |
| Temperature | °C | 20 | 20 |
| Pressure | kPa | 5263 | 5253 |
| Catalyst feed | (g/h) | 4.0 | 2.7 |
| **Loop** | | | |
| Temperature | °C | 65 | 65 |
| Pressure | kPa | 5237 | 5243 |
| Feed H2/C3 | mol/kmol | 0.06 | 0.10 |
| Feed C2/C3 | mol/kmol | 18.7 | 18.6 |
| Feed C4/C3 | mol/kmol | 64.4 | 54.6 |
| Split | wt.-% | 68 | 66 |
| C2 (of TERPO-1) | wt.-% | 0.70 | 0.64 |
| C4 (of TERPO-1) | wt.-% | 6.13 | 5.9 |
| $MFR_2$ (of TERPO-1) | g/10min | 2.1 | 7.4 |
| **GPR** | | | |
| Temperature | °C | 80 | 77 |
| Pressure | kPa | 2501 | 2499 |

(continued)

| GPR | | | |
|---|---|---|---|
| H2/C3 | mol/kmol | 1.1 | 0.8 |
| C2/C3 | mol/kmol | 81.2 | 53.3 |
| C4/C3 | mol/kmol | 59.4 | 46.6 |
| Split | wt.-% | 32 | 34 |
| C2 of GPR polymer (TERPO-2) | wt.-% | 1.7 | 0.82 |
| C4 of GPR polymer (TERPO-2) | wt.-% | 10.4 | 6.8 |
| $MFR_2$ of GPR polymer (TERPO-2) | g/10 min | 7.4 | 4.9 |
| **Final polymer (pellets)** | | | |
| $MFR_2$ | g/10min | 4.1 | 6.4 |
| C2 | wt.-% | 1.0 | 0.7 |
| C4 | wt.-% | 7.5 | 6.2 |
| XCS | wt.-% | 2.5 | 0.7 |
| Tm | °C | 126.2 | 128.8 |
| Tc | °C | 89.9 | 92.5 |
| 2,1 regio defects | mol-% | 0.29 | 0.32 |

The polymer powders were compounded in a co-rotating twin-screw extruder Coperion ZSK 70 at 220°C with 0.1 wt.-% antiblock agent (synthetic silica; CAS-no. 7631-86-9); 0.05 wt.-% antioxidant (Tris (2,4-di-tbutylphenyl)phosphite, CAS-no. 31570-04-4, commercially available as Irgafos 168FF from BASF SE); 0.05 wt.-% of a sterically hindered phenol (Pentaerythrityl-tetrakis(3-(3',5'-di-tert.butyl-4-hydroxyphenyl)-propionate, CAS-no. 6683-19-8, commercially available as Irganox 1010FF from BASF SE); and 0.05 wt.-% (each based on the total weight of the polymer) of Synthetic hydrotalcite (CAS-no. 11097-59-9) as acid scavenger.

As propylene-1-butene random copolymer Tafmer XM-7070 was used. Tafmer XM700 has a content of units derived from butene of 32.5 wt.-%, an $MFR_2$ (ASTM D1238, 230 °C, 2.16 kg) of 7 g/10min, a melting temperature Tm of 75 °C, a Young's modulus (ASTM D638) of 290 MPa, tensile strength at break (ASTM D638) of 34 MPa, and an elongation at break of 750%. Shore D hardness (ASTM D2240) is 52.

**Multilayer BOPP film**

**Inventive biaxially oriented multilayer film (IE1)**

For the core layer (CL) the commercial product HC101BF of Borealis AG which is a homopolymer having an $MFR_2$ (230 °C) of 3.2 g/10min has been used.

For the outer layers (OL1) and (OL2) a blend of the above produced inventive C2C3C4 terpolymer and 20 wt.-% Tafmer XM-7070 was used

Multilayer BOPP film was produced on a BOPP pilot line.

In order to produce the BOPP film mentioned above, first a film was produced with coextrusion of 3 layers operated with 3 extruders. Extrusion condition are shown in Table 2. The cast roll had a temperature of 35 °C and the water batch temperature was 30 °C.

The thickness of the original cast film was chosen/adjusted based on the final thickness and stretch ratios in MD/TM of the final BOPP film.

**Table 2:** Production conditions for the film of IE1 (identical in terms of temperature and output for all examples):

| Extruder | | **Main** | **Coex 1** | **Coex 2** | **Coex 3** | **Coex 4** |
|---|---|---|---|---|---|---|
| Layer | | CL | OL1 | OL2 | TL1 | TL2 |

(continued)

| Extruder | | **Main** | **Coex 1** | **Coex 2** | **Coex 3** | **Coex 4** |
|---|---|---|---|---|---|---|
| Resin | | HC101BF | $C_2C_3C_4$ copo + $C_3C_4$ copo | $C_2C_3C_4$ copo + $C_3C_4$ copo | HC101BF | HC101BF |
| Barrel temp | °C | 250 | 240 | 240 | 240 | 240 |
| Melt temp | °C | 248 | 252 | 254 | 249 | 251 |
| Output | kg/h | 150 | 7.6 | 7.6 | 28.8 | 29.4 |

Afterwards biaxially orientation was done:

*Machine direction stretching (MDO)*

MD stretching ratio = 4.7 (in 1 step - 1st fast roll in contact with the bath side skin)
MDO rolls temperature: preheat 120 °C / stretch 118 °C / annealing 120 °C

*Transverse direction stretching (TDO)*

TD stretching ratio = 8.8
TDO oven temperature: preheat 183-180-175 °C / stretch 158-158 °C / annealing 162-162 °C
TDO rail width: 195-195-195-195 / 850-1500 / 1450-1400-1395mm

*Treatment*

Top corona on caster skin: 2.4 kW equivalent to 25.0 Wmin/$m^2$

Table 3: film structure after biaxial orientations for IE1 was:

| Layer | Resin | Final thickness |
|---|---|---|
| Coex 1 (OL1) | blend | 1 μm |
| Main (CL) | HC101BF | 23.0 μm |
| Coex 2 (OL2) | blend | 1 μm |

**Comparative biaxially oriented multilayer films CE1 and CE2**

For CE1 and CE2, the above prepared comparative C2C3C4 copolymer was used in the outer layers (CE1: 100 wt.-%, CE2: blend of 80 wt.-% with 20 wt.-% of Tafmer XM-7070)
For CE3 100 wt.-% of the inventive C2C3C4 terpolymer has been used in the outer layers. For CE4 and CE5 TD310BF, a $C_2C_3C_4$ terpolymer produced with a Ziegler-Natta catalyst, commercially available from Borealis was used in the outer layers (CE1: 100wt.-%, CE2: blend of 80 wt.-% with 20 wt.-% of Tafmer XM-7070).
The preparation of the biaxially oriented multilayer film was done as described above for the Inventive film structure.
In Table 4 the film properties of the inventive film structure as well as for the comparative films are shown.

**Table 4:** film properties:

| | | CE1 | CE2 | CE3 | IE1 | CE4 | CE5 |
|---|---|---|---|---|---|---|---|
| Outer layers | | | | | | | |
| terpolymer | | 100 wt.-% comparative C2C3C4 | 80 wt.-% comparative C2C3C4 | 100 wt.-% inventive C2C3C4 | 80 wt.-% inventive C2C3C4 | 100 wt.-% TD310BF | 80 wt.-% TD310BF |
| Tafmer XM-7070 | | - | 20 wt.-% | - | 20 wt.-% | - | 20 wt.-% |
| SIT @100g/ 25mm | °C | 102 | 91 | 102 | 77 | 102 | 92 |
| SIT@ 200g/ 25mm | °C | 104 | 94 | 104 | 80 | 105 | 95 |
| SIT @300g/ 25mm | °C | 107 | 97 | 106 | 83 | 107 | 97 |
| Haze | % | 0.7 | 0.7 | 0.65 | 0.65 | 1.2 | 0.98 |

SIT @100g/25mm is the sealing initiation temperature determined when a seal strength of 100 g/25 mm has been achieved.

SIT @200g/25mm is the sealing initiation temperature determined when a seal strength of 200 g/25 mm has been achieved.

SIT @300g/25mm is the sealing initiation temperature determined when a seal strength of 300 g/25 mm has been achieved.

As can be seen, IE1 shows significant reduction in SIT values, while the processing window is broadened by ~30°C compared to CE1 and CE3. Compared to CE2, at the same concentration of elastomer, sealing starts at more than 10°C lower.

## Claims

**1.** Biaxially oriented polypropylene-based multilayer film comprising at least a core layer (CL), a first outer layer (OL1) and a second outer layer (OL2), wherein

the first and the second outer layers (OL1) and (OL2) comprise a blend of

i) 60.0 to 95.0 wt.-%, based on the total weight of the blend, of a metallocene catalysed ethylene-propylene-1-butene terpolymer base resin having

- an ethylene (C2) content measured by $^{13}$C-NMR analysis (as described in the experimental part) in the range of 0.8 to 2.5 wt.-% with respect the total weight of the ethylene-propylene-1-butene terpolymer base resin;
- a 1-butene (C4) content measured by $^{13}$C-NMR analysis (as described in the experimental part) in the range of 3.0 to 10.0 wt.-% with respect the total weight of the ethylene-propylene-1-butene terpolymer base resin;
- a propylene (C3) content measured by $^{13}$C-NMR analysis (as described in the experimental part) in the range of 89.2 to 93.0 wt.-% with respect the total weight of the ethylene-propylene-1-butene terpolymer base resin;

whereby the units derived from ethylene, propylene and butene add up to 100 wt.-%, and

- a melt flow rate $MFR_2$ (230 °C / 2.16 kg) measured according to ISO 1133 in the range from 3.0 to

35.0 g/10min;

- a xylene cold soluble (XCS) content in the range of 1.0 to 4.5 wt.-%, determined at 25 °C according ISO 16152;
- a melting temperature $T_m$ as determined by DSC according to ISO 11357 in the range from 120 to 140 °C;
- a crystallization temperature $T_c$ as determined by DSC according to ISO 11357 in the range from 80 to 115 °C and
- a number of 2,1 regio defects measured by $^{13}C$-NMR analysis (as described in the experimental part) in the range of 0.10 to 1.0 mol-% and

ii) 40.0 to 5.0 wt.-%, based on the total weight of the blend, of a propylene-1-butene random copolymer having

- a melting temperature $T_m$ measured by differential scanning calorimetry (DSC) in the range from 70 to 90 °C,
- a 1-butene content measured by $^{13}C$-NMR analysis (as described in the experimental part) in an amount of 20.0 to 35.0 wt.-% with respect the total weight of the propylene-1-butene random copolymer, whereby the units derived from propylene and 1-butene add up to 100 wt.-%,
- a melt flow rate $MFR_2$ (230 °C / 2.16 kg) measured according to ISO 1133 in the range of 1.0 to 18.0 g/10min; and
- optionally an elongation at break (ASTM D638) of 100 to 900 %,

whereby the core layer (CL) is a polypropylene-based layer and
whereby the biaxially oriented polypropylene-based multilayer film has
a sealing initiation temperature SIT @100g/25mm measured on a 25 μm biaxially oriented test cast film at a seal strength of 100 g/25 mm as described in the experimental part in the range of 50 to 90 °C, and
a haze measured on a BOPP film with a thickness of 25 μm according to ASTM D 1003-00 in the range of 0.5 to 1.5 %.

**2.** The biaxially oriented polypropylene-based multilayer film according to claim 1, wherein in the ethylene-propylene-1-butene terpolymer base resin the total content of ethylene and 1-butene comonomers, with respect to the total weight of the ethylene-propylene-1-butene terpolymer base resin is in the range of 7.0 to 10.8 wt.-%.

**3.** The biaxially oriented polypropylene-based multilayer film according to claim 1 or 2, wherein the propylene-ethylene random copolymer comprises, or consists of, two polymer fractions (TERPO-1) and (TERPO-2), whereby the fraction (TERPO-1) is present in an amount of from 50.0 to 80.0 wt.-%, preferably from 60.0 to 78.0 wt.-% and more preferably 67.0 to 75.0 wt.-%, based on the total weight of the ethylene-propylene-1-butene terpolymer base resin, and the fraction (TERPO-2) is thus present in an amount of from 20.0 to 50.0 wt.-%, more preferably from 22.0 to 40.0 wt.-% and more preferably 25.0 to 33.0 wt.-%, based on the total weight of the ethylene-propylene-1-butene terpolymer base resin.

**4.** The biaxially oriented polypropylene-based multilayer film according to claim 3, wherein the fraction (TERPO-1) of the ethylene-propylene-1-butene terpolymer base resin has an ethylene content, based on the total weight of the fraction (TERPO-1), in the range of 0.2 to 2.0 wt.-%, preferably of 0.4 to 1.8 wt.-% and more preferably of 0.5 to 1.5 wt.-%, and the fraction (TERPO-2) has an ethylene content, based on the total weight of the fraction (TERPO-2), in the range of 1.0 to 4.0 wt.-%, preferably of 1.2 to 3.5 wt.-% and more preferably of 1.3 to 3.0 wt.-%, whereby the ethylene content of fraction (TERPO-1) is preferably lower than the ethylene content of fraction (TERPO-2) and wherein the 1-butene content of fraction (TERPO-1) of the ethylene-propylene-1-butene terpolymer base resin, based on the total weight of the fraction (TERPO-1), is in the range of 2.5 to 10.0 wt.-%, preferably 3.5 to 9.0 wt.-% and more preferably 4.5 to 8.0 wt.-% and the fraction (TERPO-2) has an 1-butene content, based on the total weight of the fraction (TERPO-2), in the range of 5.0 to 15.0 wt.-%, preferably of 5.5 to 14.0 wt.-% and more preferably of 6.0 to 13.0 wt.-%.

**5.** The biaxially oriented polypropylene-based multilayer film according to any of the preceding claims, wherein the propylene-1-butene random copolymer has furthermore one or more, preferably all of the following:

a) a tensile strength at break (ASTM D638) of at least 15 MPa, preferably in the range of 16 to 50 MPa, more preferably 20 to 45 MPa and even more preferably 25 to 40 MPa;
b) a tensile (Young's) modulus (according to ASTM D638) of least 200 MPa, preferably in the range of 210 to

450 MPa, more preferably 250 to 400 MPa;

c) a shore D hardness (ASTM D2240) of at least 45, preferably in the range of 48 to 65, more preferably 50 to 60.

**6.** The biaxially oriented polypropylene-based multilayer film according to any of the preceding claims, wherein the core layer (CL) comprises, preferably consists of a propylene homopolymer (H-PP).

**7.** The biaxially oriented polypropylene-based multilayer film according to claim 6, wherein the propylene homopolymer (H-PP) is **characterized by** a xylene soluble content (XCS) as determined according to ISO 16152 of below 5.0 wt.-%, more preferably below 4.0 wt.-%, still more preferably below 3.5 wt.-% and/or a melting temperature $T_m$ (measured with DSC) of at least 145 °C, more preferably at least 150 °C, still more preferably at least 160 °C.

**8.** The biaxially oriented polypropylene-based multilayer film according to any of the preceding claims, wherein the film may further comprise one or two tie layers (TL1) and (TL2), whereby the optional tie layers are located between the core layer (CL) and one or both of the outer layers (OL1) and/or (OL2).

**9.** The biaxially oriented polypropylene-based multilayer film according to claim 8, wherein the tie layers (TL1) and (TL2) are made of a polypropylene based polymer, preferably of the same propylene based polymer and more preferably of the same polypropylene based polymer as used for the core layer (CL), even more preferably of the same propylene homopolymer as used for the core layer (CL).

**10.** The biaxially oriented polypropylene-based multilayer film according to any of the preceding claims, wherein the thickness of the layers after biaxial orientation is for

each outer layer: 0.3 μm to 3.0 μm, preferably 0.5 μm to 2.0 μm, more preferably 0.8 μm to 1.5 μm, whereby preferably, both outer layers have the same thickness;

the core layer: 5 μm to 40 μm, preferably 10 μm to 35 μm, more preferably 15 μm to 25 μm; and

each tie layers, if present: 1.0 μm to 5 μm, preferably 1.5 μm to 4.5 μm, more preferably 2.0 μm to 4.50 μm, whereby preferably, both tie layers have the same thickness and whereby the total thickness of the BOPP film is 8 μm to 80 μm, preferably 10 μm to 60 μm, more preferably 15 μm to 40 μm.

**11.** The biaxially oriented polypropylene-based multilayer film according to any of the preceding claims, wherein the film is **characterized by** a sealing initiation temperature SIT @100g/25mm measured on a 25μm biaxially oriented test cast film at a seal strength of 100 g/25 mm determined as described in the experimental part in the range of 65 to 88 °C, more preferably in the range of 70 °C to 85 °C.

**12.** The biaxially oriented polypropylene-based multilayer film according to any of the preceding claims, wherein the film is **characterized by** a haze (measured on a BOPP film with a thickness of 25 μm according to ASTM D 1003-00) in the range of 0.55 and 1.0 %.

**13.** The biaxially oriented polypropylene-based multilayer film according to any of the preceding claims, wherein the film has a broadened processing window, which is defined by the difference between the melting temperature $T_m$ of the ethylene-propylene-1-butene terpolymer base resin, determined according to DSC analysis, and the sealing initiation temperature (SIT) of the film, whereby the difference is in the range of 30 to 70 °C, more preferably in the range of 35 to 65 °C, and even more preferably in the range from 40 to 60 °C.

**14.** Use of the biaxially oriented polypropylene-based multilayer film according to any of the preceding claims, as packing material, in particular as a packing material for food and/or non-food products like textiles, flowers, pet food, detergents and protective films for cardboard boxes containing tobacco product or perfumes.

European Patent Office

# EUROPEAN SEARCH REPORT

Application Number
EP 23 16 0378

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 036 129 A1 (BOREALIS AG [AT]) 3 August 2022 (2022-08-03) * the whole document * ----- | 1-14 | INV. B32B7/12 B32B27/08 B32B27/30 B32B27/32 C08J5/18 C08L23/04 B32B7/023 B32B7/027 |
| A | WO 2021/110615 A1 (BOREALIS AG [AT]) 10 June 2021 (2021-06-10) * abstract; claims 1-15 * ----- | 1-14 | |
| A | WO 2022/207737 A1 (BOREALIS AG [AT]) 6 October 2022 (2022-10-06) * abstract; claims 1-14 * ----- | 1-14 | |
| | | | TECHNICAL FIELDS SEARCHED (IPC) |
| | | | B32B C08J C08L |

The present search report has been drawn up for all claims

| Place of search | Date of completion of the search | Examiner |
|---|---|---|
| The Hague | 7 August 2023 | Bergmans, Koen |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 16 0378

This annex lists the patent family members relating to the patent documents cited in the above-mentioned European search report. The members are as contained in the European Patent Office EDP file on
The European Patent Office is in no way liable for these particulars which are merely given for the purpose of information.

07-08-2023

| Patent document cited in search report | | Publication date | Patent family member(s) | | | Publication date |
|---|---|---|---|---|---|---|
| EP 4036129 | A1 | 03-08-2022 | EP | 4036129 | A1 | 03-08-2022 |
| | | | WO | 2022167107 | A1 | 11-08-2022 |
| | | | WO | 2022167108 | A1 | 11-08-2022 |
| | | | WO | 2022167368 | A1 | 11-08-2022 |
| WO 2021110615 | A1 | 10-06-2021 | BR | 112022010608 | A2 | 16-08-2022 |
| | | | CN | 114761236 | A | 15-07-2022 |
| | | | EP | 4069510 | A1 | 12-10-2022 |
| | | | US | 2023001674 | A1 | 05-01-2023 |
| | | | WO | 2021110615 | A1 | 10-06-2021 |
| WO 2022207737 | A1 | 06-10-2022 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009019169 A1
- EP 20193414 A
- WO 2022167368 A
- WO 2013007650 A1
- WO 2015158790 A2
- WO 2018122134 A1
- WO 2019179959 A
- WO 9414856 A
- WO 9512622 A
- WO 2006097497 A
- EP 0887379 A
- WO 9212182 A
- WO 2004000899 A
- WO 2004111095 A
- WO 9924478 A
- WO 9924479 A
- WO 0068315 A


### Non-patent literature cited in the description


- *Chemical Reviews,* 2000, vol. 100 (4), 1316-1327
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* vol. 200745, S1, , S198
- **CASTIGNOLLES, P. ; GRAF, R. ; PARKINSON, M. ; WILHELM, M. ; GABORIEAU, M.** *Polymer,* 2009, vol. 50, 2373
- **RESCONI, L. ; CAVALLO, L. ; FAIT, A. ; PIEMONTESI, F.** *Chem. Rev.,* 2000, vol. 100, 1253
- **A.J. BRANDOLINI ; D.D. HILLS.** NMR spectra of polymers and polymer additives. Marcel Deker Inc, 2000
- *CHEMICAL ABSTRACTS,* 7631-86-9
- *CHEMICAL ABSTRACTS,* 31570-04-4
- *CHEMICAL ABSTRACTS,* 6683-19-8
- *CHEMICAL ABSTRACTS,* 11097-59-9